# FASCICULE DE BREVET EUROPEEN

(11) **EP 3 847 006 B1**
(45) Date de publication et mention de la délivrance du brevet: **24.08.2022**
(21) Numéro de dépôt: 19783584.6
(22) Date de dépôt: 03.09.2019
(51) Int. Cl.: B29C 70/24, F01D 25/24, B29C 70/32, B29L 31/00, B29C 70/86

(54) **CARTER EN MATERIAU COMPOSITE AVEC RAIDISSEUR INTEGRE**
VERBUNDSTOFFGEHÄUSE MIT INTEGRIERTER VERSTEIFUNG
COMPOSITE-MATERIAL CASING HAVING AN INTEGRATED STIFFENER

(30) Priorité: 05.09.2018 FR 1857963
(43) Date de publication de la demande: 14.07.2021
(73) Titulaire: SAFRAN AIRCRAFT ENGINES, 75015 Paris (FR)
(72) Inventeur: BOUROLLEAU, Clément, 77550 MOISSY-CRAMAYEL (FR); DOMINGUES, Serge, 77550 MOISSY-CRAMAYEL (FR); FIORE, Vincent, Pascal, 77550 MOISSY-CRAMAYEL (FR); ROGNIN, Florent, Louis, André, 77550 MOISSY-CRAMAYEL (FR); SIRAJ, Anwer, 77550 MOISSY-CRAMAYEL (FR)
(74) Mandataire: Cabinet Beau de Loménie
(86) Numéro de dépôt international: PCT/FR2019/052031
(87) Numéro de publication internationale: WO 2020/049254

(56) Documents cités:
- EP-A2- 2 290 197
- FR-A1- 3 045 448
- FR-A1- 3 045 456
- US-A1- 2017 266 893

## Description

### Arrière-plan de l'invention

L'invention concerne les carters de turbine à gaz, et plus particulièrement, mais non exclusivement, les carters de soufflante de turbine à gaz pour moteurs aéronautiques.

La fabrication d'un carter en matériau composite débute par la réalisation d'une texture fibreuse sous forme de bande, la texture fibreuse étant réalisée par tissage tridimensionnel entre une pluralité de couches de fils de chaîne et une pluralité de couches de fils de trame. La texture fibreuse ainsi obtenue est enroulée sur plusieurs tours sur un moule ou outillage présentant la forme du carter à réaliser et maintenue entre le moule et des segments formant contre-moule de manière à obtenir une préforme fibreuse.

Une fois la préforme fibreuse réalisée, c'est-à-dire à la fin de l'enroulement de la texture fibreuse, l'outillage portant la préforme fibreuse est fermé par des contres-moules puis transporté jusqu'à une étuve ou four dans lequel la densification de la préforme par une matrice est réalisée, la matrice pouvant être notamment obtenue par injection et polymérisation d'une résine dans la préforme fibreuse. La fabrication d'un carter de soufflante en matériau composite à matrice organique est notamment décrite dans les documents FR 3 045 456 et US 8 322 971.

Dans un moteur aéronautique à turbine à gaz, le carter de soufflante remplit plusieurs fonctions, une fonction principale qui est d'assurer la rétention retenant les débris ingérés à l'intérieur du moteur, ou les aubes ou fragments d'aubes projetés par centrifugation, afin d'éviter qu'ils ne traversent le carter et n'atteignent d'autres parties de l'aéronef. Le carter de soufflante doit également remplir des fonctions secondaires comme notamment :
- assurer la continuité mécanique (efforts et moments) entre la manche d'entrée d'air et la virole de carter intermédiaire,
- permettre la fixation de panneaux de veine (panneaux acoustiques amont et aval et cartouche d'abradable),
- assurer la liaison de pièces du moteur entre elles,
- etc.

Parallèlement à la réalisation de ces fonctions, un allégement de la masse globale du carter est toujours recherché en particulier en amincissant certaines zones de celui-ci. Toutefois, toutes les zones du carter ne peuvent pas être amincies comme c'est le cas par exemple de la zone de rétention qui doit être plus épaisse afin d'assurer la retenue d'un projectile à l'impact. De même, les brides amont et aval sont généralement épaisses afin d'assurer les interfaces avec les autres parties du moteur avec de nombreuses reprises d'efforts.

Par conséquent, les zones structurales présentes entre les brides et la zone de rétention du carter sont les seules à pouvoir être amincies. Cependant, leur amincissement entraîne une baisse de résistance mécanique dans la structure du carter qui peut être problématique en particulier vis-à-vis du comportement dynamique du carter. En effet, lors du fonctionnement du moteur aéronautique, les aubes de soufflante créent une sollicitation dynamique (poches tournantes de pression-dépression) qui excite le carter de soufflante. Par conséquent, le carter de soufflante doit présenter une raideur minimale afin de ne pas répondre à des excitations vibratoires néfastes pour le moteur, comme dans le cas par exemple d'un croisement avec les sillages des aubes de la soufflante, le carter entrant alors en résonance lorsqu'une de ses fréquences propres croise une harmonique d'excitation produite par le sillage des aubes, ce qui peut entraîner la ruine de la structure du carter.

Il existe dans l'art antérieur des solutions qui ont pour but d'éviter l'apparition de modes indésirables dans un carter en matériau composite. Une solution, notamment divulguée dans le document WO 2016/146924, consiste à munir le carter en matériau composite de raidisseurs rapportés. Cependant, cette solution est compliquée à mettre en œuvre, en particulier en ce qui concerne la fixation des raidisseurs qui doit être la plus fiable possible.

### Objet et résumé de l'invention

L'invention a pour but de proposer un carter de turbine à gaz en matériau composite dont la raideur peut être accrue sans les inconvénients des solutions de l'art antérieur.

Ce but est atteint notamment grâce à un procédé de fabrication d'un carter en matériau composite pour une turbine à gaz selon la revendication 1, comprenant:
- la réalisation par tissage tridimensionnel entre une pluralité de couches de fils de chaîne et une pluralité de couches de fils de trame d'une texture fibreuse sous forme d'une bande,
- l'enroulement de la texture fibreuse sur plusieurs tours superposés sur un mandrin de profil correspondant à celui du carter à fabriquer afin d'obtenir une préforme fibreuse de forme correspondant à celle du carter à fabriquer,
- la densification de la préforme fibreuse par une matrice,
dans lequel, lors de l'enroulement du dernier tour de la texture fibreuse sur le mandrin, au moins un élément raidisseur étant interposé entre l'avant-dernier tour et le dernier tour de la texture fibreuse, l'élément raidisseur faisant saillie sur la surface externe de l'avant-dernier tour de la texture fibreuse et s'entendant sur toute la circonférence dudit avant-dernier tour, l'élément raidisseur présentant en coupe axiale une forme de type oméga,
caractérisé en ce qu'au moins des fils de chaîne de la pluralité de couches de fils de chaîne dans le dernier tour de la texture fibreuse présents au niveau d'une zone recouvrant ledit au moins un élément raidisseur ont une taille ou un titre inférieur à la taille ou au titre des fils de chaîne de la pluralité de couches de fils de chaîne présents dans les autres tours de la texture fibreuse.

En interposant ainsi un élément raidisseur entre l'avant-dernier tour et le dernier tour d'enroulement de la texture fibreuse utilisée pour former le renfort fibreux du carter, on confère au carter en matériau composite une plus grande raideur tout en simplifiant et fiabilisant la fabrication du carter. En effet, la solution technique consistant à rapporter un ou plusieurs éléments raidisseurs sur la surface du carter engendre des opérations supplémentaires après la fabrication proprement dite du carter en matériau composite. En outre, la fixation du ou des éléments raidisseur sur la surface du carter requière l'utilisation de moyens de fixation, par exemple un collage et/ou liaison boulonnée, qui peuvent alourdir la masse globale du carter et dont la fiabilité doit être assurée pour éviter le détachement du ou des éléments raidisseurs présents sur la surface du carter. Dans le cadre de l'invention, le maintien en position de chaque élément raidisseur est assuré de manière très fiable car celui-ci est recouvert et retenu par le dernier tour d'enroulement.

En outre, avec des fils de chaîne ayant une taille ou un titre inférieur dans le dernier tour de la texture fibreuse au niveau d'une zone recouvrant l'élément raidisseur, on allège significativement la masse du carter au niveau de la zone concernée, et ce sans perte de rigidité grâce à la présence de l'élément raidisseur.

Selon une caractéristique particulière du procédé de l'invention, chaque élément raidisseur comprend deux parois latérales faisant saillie sur la surface externe de l'avant-dernier tour de la texture fibreuse, chaque paroi latérale formant un angle compris entre 50° et 85° avec l'axe du carter. Cela permet d'avoir une grande inertie et d'augmenter encore l'effet de raidissement tout en diminuant le risque d'abimer la préforme.

Selon une autre caractéristique particulière du procédé de l'invention, l'élément raidisseur est réalisé à partir d'une structure alvéolaire. La structure alvéolaire est avantageuse car elle présente une faible masse tout en présentant une bonne résistance à la compression dans la direction radiale du carter.

L'invention propose également un carter de soufflante de turbine à gaz en matériau composite avec un renfort fibreux selon la revendication 4, comprenant une pluralité de tours superposés d'une texture fibreuse sous forme d'une bande présentant un tissage tridimensionnel entre une pluralité de couches de fils de chaîne et une pluralité de couches de fils de trame, ledit renfort fibreux étant densifié par une matrice, au moins un élément raidisseur étant interposé entre l'avant-dernier tour et le dernier tour de la texture fibreuse, l'élément raidisseur faisant saillie sur la surface externe de l'avant-dernier tour de la texture fibreuse et s'entendant sur toute la circonférence dudit avant-dernier tour, l'élément raidisseur présentant en coupe axiale une forme de type oméga,
caractérisé en ce qu'au moins des fils de chaîne de la pluralité de couches de fils de chaîne dans le dernier tour de la texture fibreuse présents au niveau d'une zone recouvrant ledit au moins un élément raidisseur ont une taille ou un titre inférieur à la taille ou au titre des fils de chaîne de la pluralité de couches de fils de chaîne présents dans les autres tours de la texture fibreuse.

Selon une caractéristique particulière du carter selon l'invention, chaque élément raidisseur comprend deux parois latérales faisant saillie sur la surface externe de l'avant-dernier tour de la texture fibreuse, chaque paroi latérale formant un angle compris entre 50° et 85° avec l'axe du carter.

Selon une autre caractéristique particulière du carter selon l'invention, l'élément raidisseur est réalisé à partir d'une structure alvéolaire.

L'invention a encore pour objet un moteur aéronautique à turbine à gaz ayant un carter de soufflante selon l'invention.

### Brève description des dessins

D'autres caractéristiques et avantages de l'invention ressortiront de la description suivante de modes particuliers de réalisation de l'invention, donnés à titre d'exemples non limitatifs, en référence aux dessins annexés, sur lesquels :
- la figure 1 est une vue en perspective et en coupe partielle d'un moteur aéronautique équipé d'un carter de soufflante en matériau composite conformément à un mode de réalisation de l'invention,
- la figure 2 est une vue en coupe selon le plan II-II du carter de la figure 1,
- la figure 3 est une vue schématique en perspective d'un métier à tisser montrant le tissage d'une texture fibreuse utilisée pour la formation du renfort fibreux du carter des figures 1 et 2,
- la figure 4 est une vue en perspective montrant le début de l'enroulement d'une texture fibreuse destinée à former le renfort du carter de soufflante des figures 1 et 2,
- la figure 5 est une vue en perspective montrant la suite de l'enroulement comprenant l'enroulement simultané de la structure fibreuse et d'un élément de raidissement de la figure 4,
- la figure 6 est une vue en perspective montrant la préforme fibreuse obtenue après enroulement complet de la structure fibreuse et de l'élément raidisseur,
- la figure 7 est une vue en coupe montrant le profil de la préforme fibreuse de la figure 6,
- la figure 8 est une vue schématique montrant un outillage permettant de densifier avec une matrice la préforme fibreuse de la figure 6,
- les figures 9A et 9B montrent un carter de soufflante en matériau composite selon l'art antérieur respectivement au repos et sous excitation,
- les figures 10A et 10B montrent un carter de soufflante en matériau composite selon l'invention respectivement au repos et sous excitation.

### Description détaillée de modes de réalisation

L'invention s'applique d'une manière générale à tout carter en matériau composite à matrice organique de turbine à gaz.

L'invention sera décrite ci-après dans le cadre de son application à un carter de soufflante de moteur aéronautique à turbine à gaz.

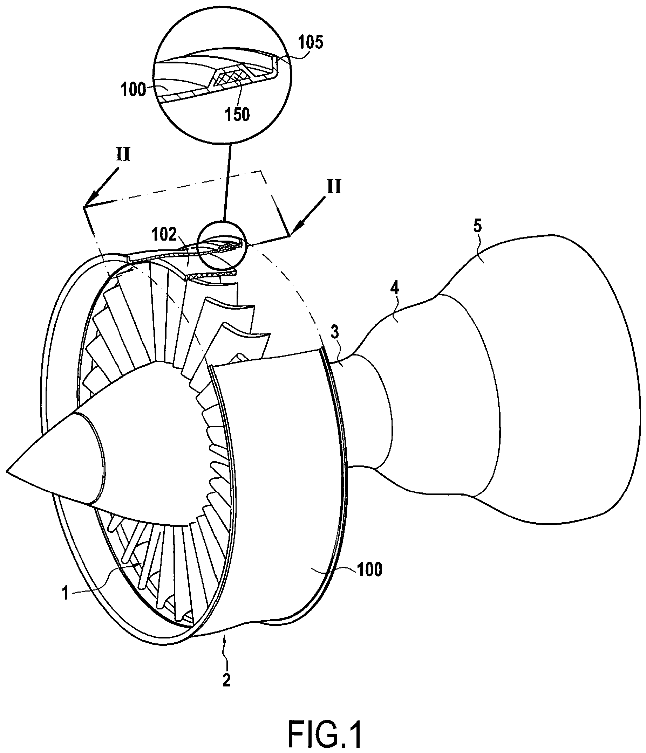

Un tel moteur, comme montré très schématiquement par la figure 1 comprend, de l'amont vers l'aval dans le sens de l'écoulement de flux gazeux, une soufflante 1 disposée en entrée du moteur, un compresseur 2, une chambre de combustion 3, une turbine haute-pression 4 et une turbine basse pression 5.

Le moteur est logé à l'intérieur d'un carter comprenant plusieurs parties correspondant à différents éléments du moteur. Ainsi, la soufflante 1 est entourée par un carter de soufflante 100 présentant une forme de révolution.

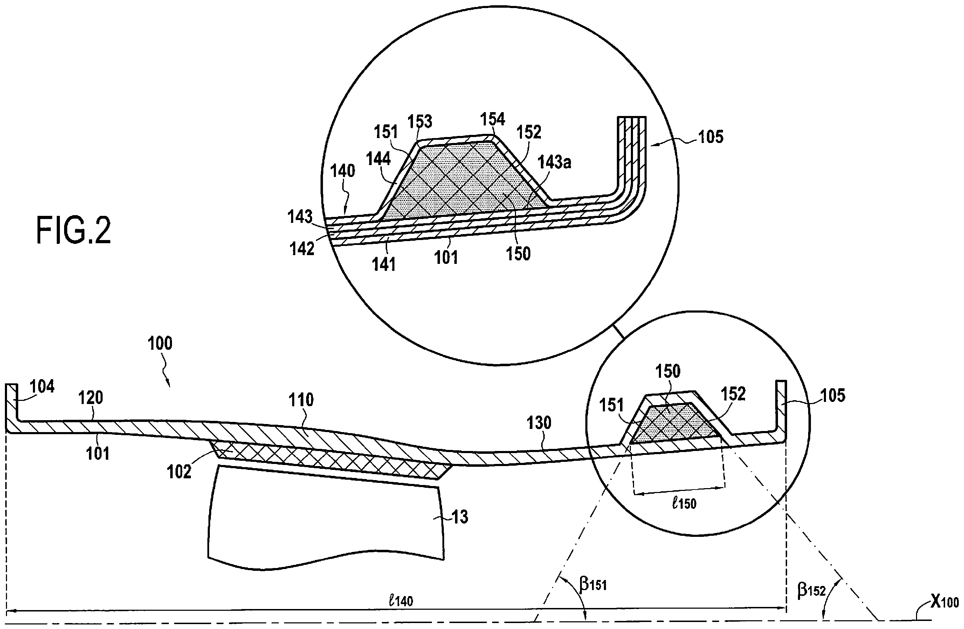

La figure 2 montre un profil de carter de soufflante 100 en matériau composite tel qu'il peut être obtenu par un procédé selon l'invention. La surface interne 101 du carter définit la veine d'entrée d'air. Elle peut être munie d'une couche de revêtement abradable 102 au droit de la trajectoire des sommets d'aubes de la soufflante, une aube 13 étant partiellement montrée de façon très schématique. Le revêtement abradable est donc disposé sur une partie seulement de la longueur (en direction axiale) du carter. Un revêtement de traitement acoustique (non représenté) peut en outre être disposé sur la surface interne 101 notamment en amont du revêtement abradable 102.

Le carter 100 peut être muni de brides externes 104, 105 à ses extrémités amont et aval afin de permettre son montage et sa liaison avec d'autres éléments. Entre ses extrémités amont et aval, le carter 100 présente une épaisseur variable, une portion de surépaisseur 110 du carter ayant une plus forte épaisseur que les parties structurales adjacentes 120 et 130. La portion de surépaisseur 110 s'étend de part et d'autre de l'emplacement de la soufflante, vers l'amont et l'aval, afin de former une zone ou un bouclier de rétention capable de retenir des débris, particules ou objets ingérés en entrée du moteur, ou provenant de l'endommagement d'aubes de la soufflante, et projetés radialement par rotation de la soufflante, pour éviter qu'ils traversent le carter et endommagent d'autres parties de l'aéronef.

Le carter 100 est réalisé en matériau composite à renfort fibreux densifié par une matrice. Le renfort est en fibres par exemple de carbone, verre, aramide ou céramique et la matrice est en polymère, par exemple époxyde, bismaléimide ou polyimide, en carbone ou en céramique.

Le renfort fibreux est formé par enroulement sur un mandrin d'une texture fibreuse réalisée par tissage tridimensionnel avec épaisseur évolutive, le mandrin ayant un profil correspondant à celui du carter à réaliser. Avantageusement, le renfort fibreux constitue une préforme fibreuse tubulaire complète du carter 100 formant une seule pièce avec des parties de renfort correspondant aux brides 104, 105.

Conformément à l'invention, le renfort fibreux du carter 100 est constitué d'une pluralité de couches superposées d'une texture fibreuse sous forme d'une bande présentant un tissage tridimensionnel ou multicouche, chaque couche correspondant à un tour d'enroulement de la texture fibreuse. Dans l'exemple décrit ici, le renfort fibreux du carter 100 est constitué de quatre couches ou tours superposés 141 à 144 d'une texture fibreuse 140, les couches ou tours 141, 142, 143 et 144 correspondant respectivement aux premier, deuxième, troisième et quatrième tours d'enroulement de la texture fibreuse 140 (sur la figure 2 les couches 141 à 144 sont densifiées par une matrice).

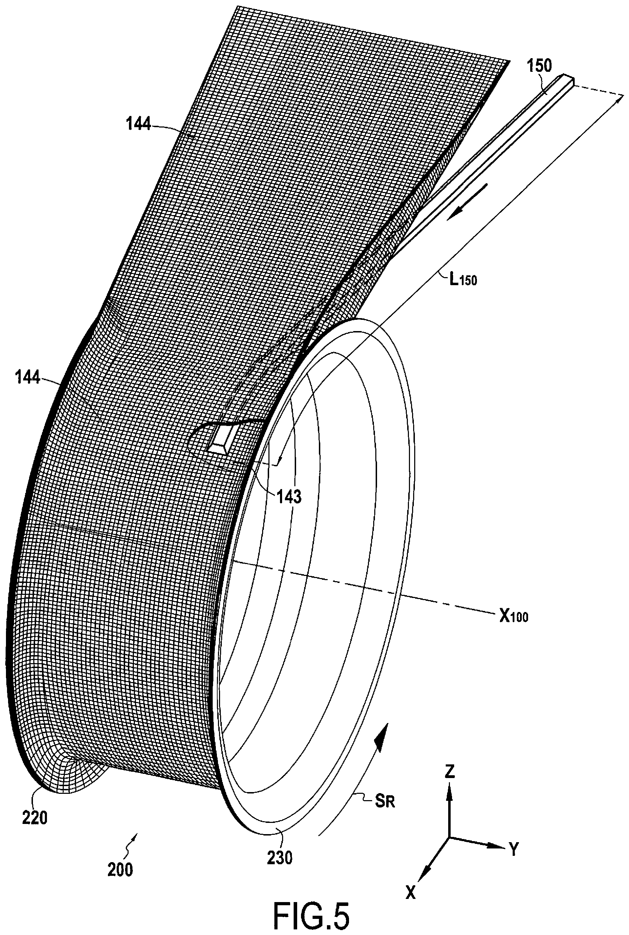

En outre, un élément raidisseur 150 est interposé entre l'avant-dernier tour et le dernier tour d'enroulement, ici entre la couche 143 et la couche 144. L'élément 150 présentant une largeur l₁₅₀ inférieure à la largeur l₁₄₀ de la texture fibreuse 140 et délimitant la zone de rétention du carter 100. L'élément raidisseur 150 fait saillie sur la surface externe 143a de l'avant-dernier tour correspondant à la couche 143 de la texture fibreuse 140, l'élément raidisseur étant recouvert par le quatrième et dernier tour d'enroulement correspondant à la couche 144 de la texture fibreuse 140. L'élément raidisseur 150 s'étend sur une longueur L₁₅₀ correspondant à la circonférence de l'avant-dernier tour d'enroulement, c'est-à-dire la longueur de la troisième couche 143 (figure 5). L'élément raidisseur 150 présente en coupe axiale une forme de type oméga ou Ω. On entend ici par forme « de type oméga » tout élément présentant une section ayant une forme en oméga ou Ω.

Ainsi, conformément à l'invention, un élément raidisseur est directement intégré à la structure du carter lors de sa fabrication, l'élément raidisseur étant recouvert par le dernier tour d'enroulement et, par conséquent, isolé de l'environnement extérieur. En interposant ainsi un élément raidisseur entre l'avant-dernier tour et le dernier tour d'enroulement de la texture fibreuse utilisée pour former le renfort fibreux du carter, on confère au carter en matériau composite une plus grande raideur tout en simplifiant et fiabilisant la fabrication du carter. En effet, la solution technique consistant à rapporter un ou plusieurs éléments raidisseurs sur la surface du carter engendre des opérations supplémentaires après la fabrication proprement dite du carter en matériau composite. En outre, la fixation du ou des éléments raidisseur sur la surface du carter requière l'utilisation de moyens de fixation, par exemple un collage et/ou liaison boulonnée, qui peuvent alourdir la masse globale du carter et dont la fiabilité doit être assurée pour éviter le détachement du ou des éléments raidisseurs présents sur la surface du carter. Dans le carter de l'invention, le maintien en position de chaque élément raidisseur est assuré de manière très fiable car celui-ci est recouvert et retenu par le dernier tour d'enroulement.

L'élément raidisseur peut se présenter sous différentes formes, comme par exemple une bande continue ou une pluralité de segments ajoutés bout à bout au fur et à mesure de l'enroulement.

L'élément raidisseur présente en coupe axiale une forme de type oméga. L'intégration d'un élément raidisseur distinct entre des couches de texture fibreuse permet d'obtenir des pentes très raides par rapport à l'axe X₁₀₀ du carter 100. Sur la figure 2, les angles β₁₅₁ et β₁₅₂ formés respectivement entre les parois latérales 151 et 152 de l'élément raidisseur 150 et l'axe X₁₀₀ du carter 100 sont de préférence compris entre 50° et 85°. Ces angles sont notamment définis en fonction de la raideur que l'on souhaite conférer au carter et des possibilités de fabrication. D'une manière générale, le dimensionnement (hauteur, largeur, etc.) et la géométrie de chaque élément raidisseur sont définies en fonction des besoins de raidissement du carter (fréquence propre).

Chaque élément raidisseur peut être notamment réalisé à partir d'une structure alvéolaire de type nid d'abeille (Nida) en matériau métallique ou composite (renfort fibreux densifié par une matrice), le matériau devant être compatible chimiquement avec la résine polymérisée constituant la matrice du matériau composite de carter comme décrite ci-après. Une structure alvéolaire de type nid d'abeille est avantageuse en ce qu'elle présente :
- une grande souplesse qui lui permet d'être facilement enroulable et d'épouser la forme circulaire du carter,
- une faible masse tout en présentant une bonne résistance à la compression dans la direction radiale du carter,
- une facilité d'usinage,
- un coût d'approvisionnement relativement faible.

Un exemple de structure alvéolaire en matériau composite compatible chimiquement avec la résine de la matrice peut être notamment un nid d'abeille Nomex^{®} de chez Hexcel^{®}.

Par ailleurs, l'élément raidisseur présente de préférence des arêtes arrondies, comme les arrêtes 153 et 154 de l'élément raidisseur 150, afin de ne pas abîmer la texture fibreuse en cisaillant des fils ou torons de celle-ci par exemple. A cet effet, les arrêtes ou angles vifs présents sur chaque élément raidisseur peuvent être usinés afin de leur conférer une forme arrondir ou douce.

On explique maintenant un procédé de fabrication du carter de soufflante 100.

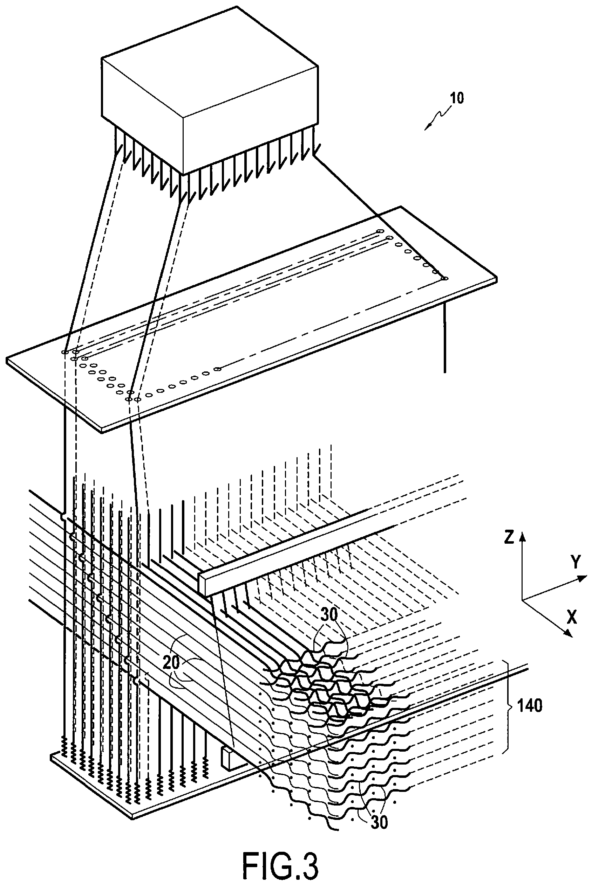

Comme représentée sur la figure 3, une texture fibreuse 140 est réalisée de façon connue par tissage au moyen d'un métier à tisser de type jacquard 10 sur lequel on a disposé un faisceau de fils de chaîne ou torons 20 en une pluralité de couches, les fils de chaîne étant liés par des fils ou torons de trame 30. La texture fibreuse est réalisée par tissage tridimensionnel. Par « tissage tridimensionnel » ou « tissage 3D », on entend ici un mode de tissage par lequel certains au moins des fils de trame lient des fils de chaîne sur plusieurs couches de fils de chaîne ou inversement. Un exemple de tissage tridimensionnel est le tissage dit à armure « interlock ». Par tissage « interlock », on entend ici une armure de tissage dans laquelle chaque couche de fils de chaîne lie plusieurs couches de fils de trame avec tous les fils d'une même colonne de chaîne ayant le même mouvement dans le plan de l'armure. D'autres types de tissage multicouche connus pourront être utilisés, comme notamment ceux décrits dans le document WO 2006/136755.

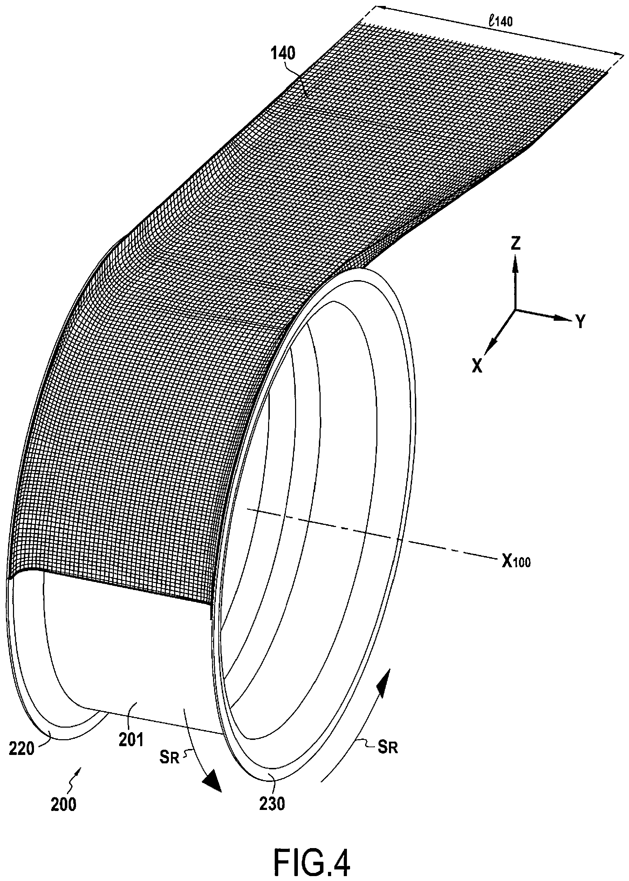

Comme illustrée sur les figures 3 et 4, la texture fibreuse 140 présente une forme de bande qui s'étend en longueur dans une direction X correspondant à la direction de défilement des fils ou torons de chaîne 20 et en largeur ou transversalement dans une direction Y correspondant à la direction des fils ou torons de trame 30.

La structure fibreuse peut être notamment tissée à partir de fils de fibres de carbone, de céramique telle que du carbure de silicium, de verre, ou encore d'aramide.

Comme illustrée sur la figure 4, une préforme fibreuse est formée par enroulement sur un mandrin 200 suivant un sens d'enroulement SR de la texture fibreuse 140 réalisée par tissage tridimensionnel, le mandrin ayant un profil correspondant à celui du carter à réaliser.

Avantageusement, la préforme fibreuse constitue un renfort fibreux tubulaire complet du carter 100 formant une seule pièce avec une portion de surépaisseur correspondant à la zone de rétention du carter.

A cet effet, le mandrin 200 présente une surface externe 201 dont le profil correspond à la surface interne du carter à réaliser. Par son enroulement sur le mandrin 200, la texture fibreuse 140 épouse le profil de celui-ci. Le mandrin 200 comporte également deux flasques 220 et 230 pour former des parties de préforme fibreuse correspondant aux brides 104 et 105 du carter 100.

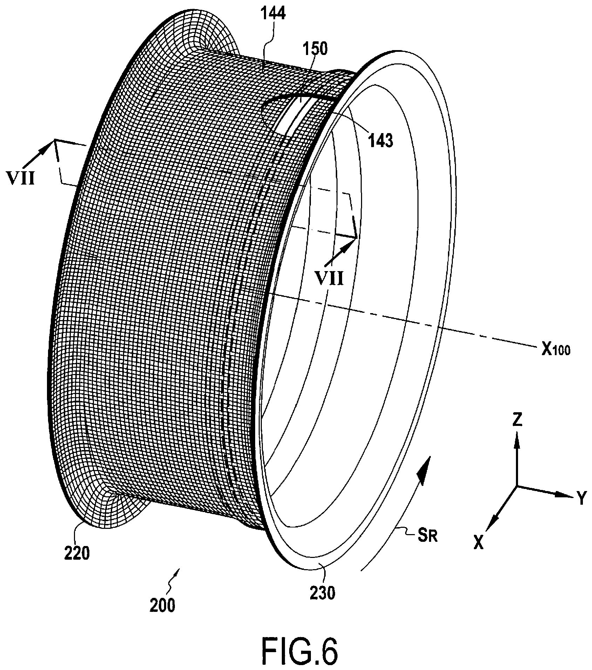

Conformément à l'invention, lors de l'enroulement du dernier tour de la texture fibreuse 140, un élément raidisseur 150 est inséré dans l'enroulement de manière à être interposé entre l'avant-dernier tour et le dernier tour de la texture fibreuse comme illustré sur la figure 5. Dans l'exemple décrit ici, l'élément raidisseur est positionné au-dessus de la troisième couche 143 de la texture 140 de manière à être recouvert par la dernière couche 144 de la texture fibreuse 140. A la fin de l'enroulement, on obtient une préforme fibreuse 300 telle que représentée sur la figure 6.

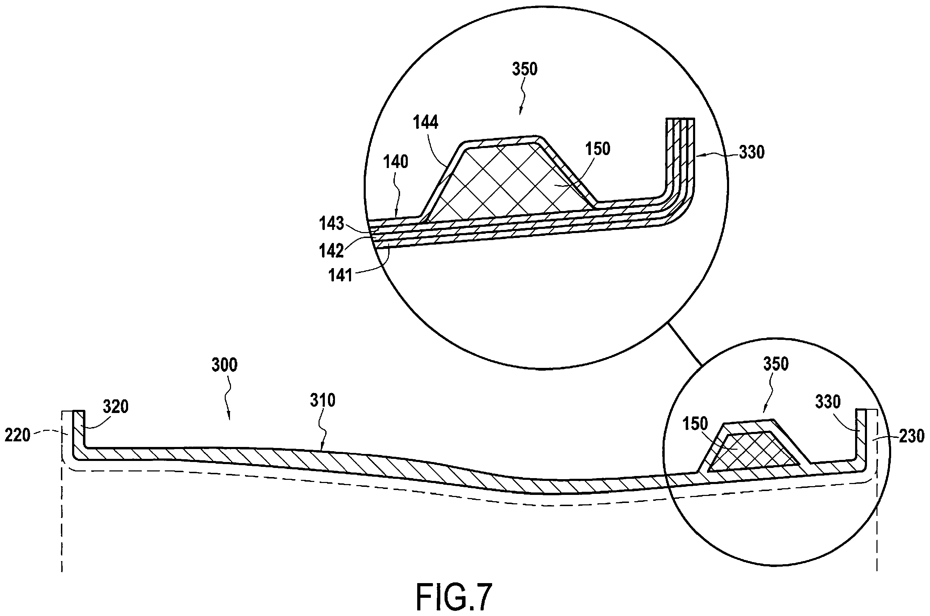

La figure 7 montre une vue en coupe de la préforme fibreuse 300 obtenue après enroulement de la texture fibreuse 140 en plusieurs couches sur le mandrin 200 et interposition de l'élément raidisseur 150 entre l'avant-dernière couche et la dernière couche. Le nombre de couches ou spires est fonction de l'épaisseur désirée et de l'épaisseur de la texture fibreuse. Il est au moins égal à 2. Dans l'exemple décrit ici, la préforme 300 comprend 4 couches 141 à 144 de texture fibreuse 140 et un élément raidisseur 150 interposé entre les couches 143 et 144 correspondant respectivement à l'avant-dernier tour et le dernier tour de l'enroulement.

On obtient une préforme fibreuse 300 avec une portion de raidissement 350 formée par interposition de l'élément raidisseur entre les couches 143 et 144. La préforme fibreuse 300 comprend également une portion de surépaisseur 310 destinée à former la zone ou bouclier de rétention 110 du carter, l'augmentation/diminution progressive d'épaisseur est obtenue par ajout/retrait d'une ou plusieurs couches de fils de chaîne et de trame comme décrit notamment dans le document EP 1 961 923. La préforme fibreuse 300 comprend encore ici des parties d'extrémité 320, 330 correspondant aux brides 104, 105 du carter.

On procède ensuite à la densification de la préforme fibreuse 300 par une matrice.

La densification de la préforme fibreuse consiste à combler la porosité de la préforme, dans tout ou partie du volume de celle-ci, par le matériau constitutif de la matrice.

La matrice peut être obtenue de façon connue en soi suivant le procédé par voie liquide.

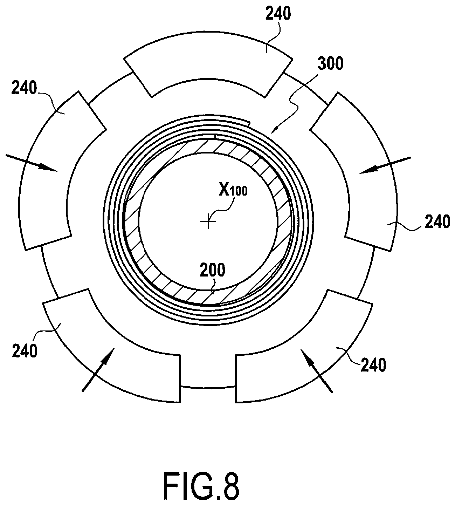

Le procédé par voie liquide consiste à imprégner la préforme par une composition liquide contenant un précurseur organique du matériau de la matrice. Le précurseur organique se présente habituellement sous forme d'un polymère, tel qu'une résine, éventuellement dilué dans un solvant. La préforme fibreuse est placée dans un moule pouvant être fermé de manière étanche avec un logement ayant la forme de la pièce finale moulée. Comme illustré sur la figure 8, la préforme fibreuse 300 est ici placée entre une pluralité de secteurs 240 formant contre-moule et le mandrin 200 formant support, ces éléments présentant respectivement la forme extérieure et la forme intérieure du carter à réaliser. Ensuite, on injecte le précurseur liquide de matrice, par exemple une résine, dans tout le logement pour imprégner toute la partie fibreuse de la préforme. Dans ce cas, le matériau aéré est de préférence imperméable à la résine de manière à ne pas alourdir la pièce finale. Dans le cas d'une mousse, celle-ci comporte des cellules ou microbilles fermées. Dans le cas d'une structure alvéolaire, les parois de la structure sont imperméables à la résine.

La transformation du précurseur en matrice organique, à savoir sa polymérisation, est réalisée par traitement thermique, généralement par chauffage du moule, après élimination du solvant éventuel et réticulation du polymère, la préforme étant toujours maintenue dans le moule ayant une forme correspondant à celle de la pièce à réaliser. La matrice organique peut être notamment obtenue à partir de résines époxydes, telle que, par exemple, la résine époxyde à hautes performances vendue, ou de précurseurs liquides de matrices carbone ou céramique.

Dans le cas de la formation d'une matrice carbone ou céramique, le traitement thermique consiste à pyrolyser le précurseur organique pour transformer la matrice organique en une matrice carbone ou céramique selon le précurseur utilisé et les conditions de pyrolyse. A titre d'exemple, des précurseurs liquides de carbone peuvent être des résines à taux de coke relativement élevé, telles que des résines phénoliques, tandis que des précurseurs liquides de céramique, notamment de SiC, peuvent être des résines de type polycarbosilane (PCS) ou polytitanocarbosilane (PTCS) ou polysilazane (PSZ). Plusieurs cycles consécutifs, depuis l'imprégnation jusqu'au traitement thermique, peuvent être réalisés pour parvenir au degré de densification souhaité.

Selon un aspect de l'invention, la densification de la préforme fibreuse peut être réalisée par le procédé bien connu de moulage par transfert dit RTM ("Resin Transfert Moulding"). Conformément au procédé RTM, on place la préforme fibreuse dans un moule présentant la forme du carter à réaliser. Une résine thermodurcissable est injectée dans l'espace interne délimité entre le mandrin 200 et les contres-moules 240. Un gradient de pression est généralement établi dans cet espace interne entre l'endroit où est injecté la résine et les orifices d'évacuation de cette dernière afin de contrôler et d'optimiser l'imprégnation de la préforme par la résine.

La résine utilisée peut être, par exemple, une résine époxyde. Les résines adaptées pour les procédés RTM sont bien connues. Elles présentent de préférence une faible viscosité pour faciliter leur injection dans les fibres. Le choix de la classe de température et/ou la nature chimique de la résine est déterminé en fonction des sollicitations thermomécaniques auxquelles doit être soumise la pièce. Une fois la résine injectée dans tout le renfort, on procède à sa polymérisation par traitement thermique conformément au procédé RTM.

Après l'injection et la polymérisation, la pièce est démoulée. Au final, la pièce est détourée pour enlever l'excès de résine et les chanfreins sont usinés pour obtenir le carter 100 illustré en figures 1 et 2.

Dans l'exemple décrit ici, le carter 100 comprend un seul élément raidisseur 150 présent entre la portion de surépaisseur 110 et la bride aval 105. Dans un autre exemple de réalisation, le carter selon l'invention peut comprendre un élément raidisseur présent entre la bride amont 104 et la portion de surépaisseur 110. Encore dans un autre exemple de réalisation, le carter selon l'invention peut comprendre un premier élément raidisseur présent entre la bride amont 104 et la portion de surépaisseur 110 et un deuxième élément raidisseur présent entre la portion de surépaisseur 110 et la bride aval 105.

Grâce au gain de raideur apporté par le ou les éléments raidisseurs intégrés au renfort fibreux de carter, il est possible de réduire la taille ou le titre des fils ou torons de chaîne dans la dernière couche ou dernier tour de la texture fibreuse au moins au niveau de la zone située au-dessus du ou des éléments raidisseur, c'est-à-dire la partie du dernier tour de la texture fibreuse recouvrant le ou les éléments raidisseur. Sur la figure 2, les fils ou torons de chaîne présents dans la quatrième et dernière couche 144 de la texture fibreuse 140 au niveau d'une zone Z_{R} présentent une taille ou un titre inférieur à la taille ou au titre des fils de chaîne de la pluralité de couches de fils de chaîne présents dans les autres tours de la texture fibreuse. A cet effet, il est possible d'utiliser des fils ou torons de chaîne à titre variable, à savoir des fils ou torons formés d'un assemblage séparable de fils unitaires ayant chacun un titre déterminé comme ceux décrits notamment dans le document EP 2 791 406. Dans ce cas, la taille ou le titre des fils de chaîne peut être réduit lors de leur entrée dans le dernier tour d'enroulement en retirant un ou plusieurs fils unitaire des fils à titre variable au niveau de la zone concernée. A titre d'exemple, il est possible d'avoir des fils de chaîne ayant un titre de 12K (12 000 fibres) dans le dernier tour d'enroulement au niveau de la ou des zones recouvrant le ou les éléments raidisseurs alors que les fils de chaîne dans les autres tours d'enroulement ont un titre de 24K (24 000 fibres). Cela permet de réduire la masse d'un facteur 2 dans la zone concernée tout en apportant un gain de raideur grâce à l'élément raidisseur.

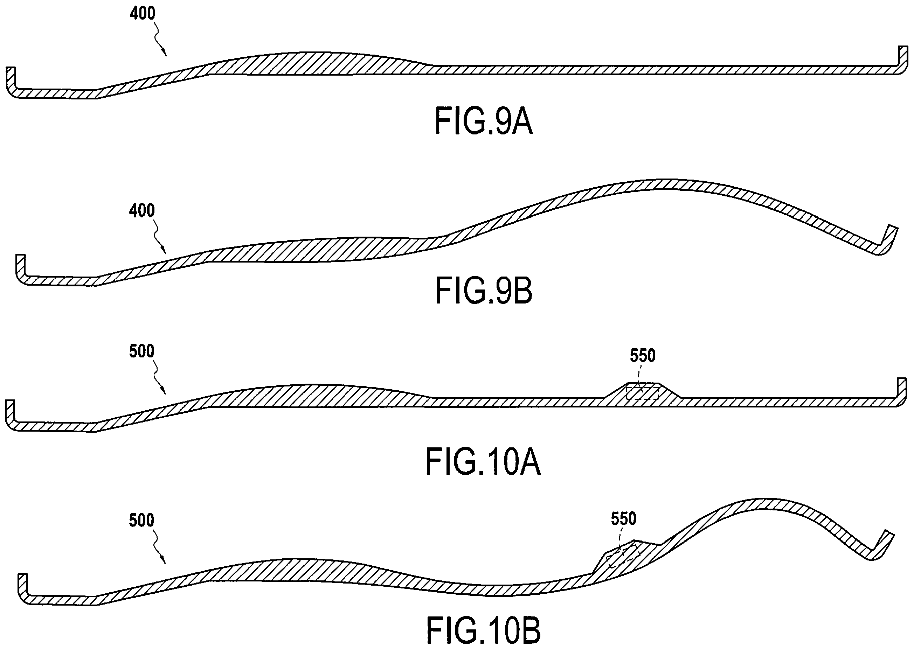

Les figures 9A et 9B montrent un carter de soufflante en matériau composite 400 selon l'art antérieur, c'est-à-dire sans intégration d'élément raidisseur dans le renfort fibreux du carter. La figure 9A représente le carter 400 au repos tandis que la figure 9B montre la déformation du carter 400 simulée par calcul lors d'une excitation de celui-ci par sollicitation dynamique des aubes de soufflante en fonctionnement. Le carter de soufflante 400 a une masse M₄₀₀ et une fréquence propre F₄₀₀.

Les figures 10A et 10B montrent un carter de soufflante en matériau composite 500 selon l'invention, c'est-à-dire avec intégration d'un élément raidisseur 550 dans le renfort fibreux du carter. La figure 10A représente le carter 500 au repos tandis que la figure 10B montre la déformation du carter 500 simulée par calcul lors d'une excitation de celui-ci par sollicitation dynamique des aubes de soufflante en fonctionnement. Le carter de soufflante 500 a une masse Msoo inférieure à la masse M₄₀₀ du carter 400 grâce à l'intégration de l'élément raidisseur 550 qui permet d'amincir le carter dans au niveau de la zone intégrant le raidisseur 550, par exemple en réduisant la taille ou le titre des fils de chaîne dans cette zone et en utilisant une structure alvéolaire pour l'élément raidisseur comme décrit précédemment. Le calcul de simulation de la déformation montre que le carter 500 présente une fréquence propre F₅₀₀ qui est supérieure à la fréquence propre F₄₀₀ du carter 400 selon l'art antérieur. Par conséquent, en intégrant au moins un élément raidisseur dans le renfort fibreux du carter conformément à la présente invention, il est possible de diminuer la masse globale du carter en matériau composite tout en augmentant la fréquence propre de ce dernier, ce qui démontre l'augmentation de la raideur apportée par l'élément raidisseur.

## Revendications

1. Procédé de fabrication d'un carter (100) en matériau composite pour une turbine à gaz, comprenant:
- la réalisation par tissage tridimensionnel entre une pluralité de couches de fils de chaîne (20) et une pluralité de couches de fils de trame (30) d'une texture fibreuse (140) sous forme d'une bande,
- l'enroulement de la texture fibreuse (140) sur plusieurs tours superposés (141, 142, 143, 144) sur un mandrin (200) de profil correspondant à celui du carter à fabriquer afin d'obtenir une préforme fibreuse (300) de forme correspondant à celle du carter à fabriquer,
- la densification de la préforme fibreuse (300) par une matrice,
et dans lequel, lors de l'enroulement du dernier tour de la texture fibreuse (140) sur le mandrin (200), au moins un élément raidisseur (150) est interposé entre l'avant-dernier tour (143) et le dernier tour (144) de la texture fibreuse, l'élément raidisseur faisant saillie sur la surface externe (143a) de l'avant-dernier tour (143) de la texture fibreuse (140) et s'entendant sur toute la circonférence dudit avant-dernier tour, l'élément raidisseur (150) présentant en coupe axiale une forme de type oméga,
**caractérisé en ce qu'**au moins des fils de chaîne de la pluralité de couches de fils de chaîne dans le dernier tour (144) de la texture fibreuse (140) présents au niveau d'une zone recouvrant ledit au moins un élément raidisseur (150) ont une taille ou un titre inférieur à la taille ou au titre des fils de chaîne de la pluralité de couches de fils de chaîne présents dans les autres tours (141, 142, 143) de la texture fibreuse.

2. Procédé selon la revendication 1, dans lequel chaque élément raidisseur (150) comprend deux parois latérales (151, 152) faisant saillie sur la surface externe (143a) de l'avant-dernier tour (143) de la texture fibreuse (140), chaque paroi latérale formant un angle compris entre 50° et 85° avec l'axe (X₁₀₀) du carter.

3. Procédé selon la revendication 2, dans lequel l'élément raidisseur (150) est réalisé à partir d'une structure alvéolaire.

4. Carter de soufflante (100) de turbine à gaz en matériau composite avec un renfort fibreux comprenant une pluralité de tours superposés (141, 142, 143, 144) d'une texture fibreuse (140) sous forme d'une bande présentant un tissage tridimensionnel entre une pluralité de couches de fils de chaîne (20) et une pluralité de couches de fils de trame (30), ledit renfort fibreux étant densifié par une matrice, au moins un élément raidisseur (150) étant interposé entre l'avant-dernier tour (143) et le dernier tour (144) de la texture fibreuse (140), l'élément raidisseur faisant saillie sur la surface externe (143a) de l'avant-dernier tour (143) de la texture fibreuse et s'entendant sur toute la circonférence dudit avant-dernier tour, l'élément raidisseur (150) présentant en coupe axiale une forme de type oméga,
caractérisé en qu'au moins des fils de chaîne de la pluralité de couches de fils de chaîne dans le dernier tour (144) de la texture fibreuse (140) présents au niveau d'une zone recouvrant ledit au moins un élément raidisseur (150) ont une taille ou un titre inférieur à la taille ou au titre des fils de chaîne de la pluralité de couches de fils de chaîne présents dans les autres tours (141, 142, 143) de la texture fibreuse.

5. Carter selon la revendication 4, dans lequel chaque élément raidisseur (150) comprend deux parois latérales (151, 152) faisant saillie sur la surface externe (143a) de l'avant-dernier tour (143) de la texture fibreuse (140), chaque paroi latérale formant un angle compris entre 50° et 85° avec l'axe (X₁₀₀) du carter.

6. Carter selon la revendication 4 ou 5, dans lequel l'élément raidisseur (150) est réalisé à partir d'une structure alvéolaire.

7. Moteur aéronautique à turbine à gaz ayant un carter de soufflante (100) selon l'une quelconque des revendications 4 à 6.

## Patentansprüche

1. Verfahren zur Herstellung eines Gehäuses (100) aus Verbundstoff für eine Gasturbine, das umfasst:
- Ausführen einer faserigen Textur (140) in der Form eines Bandes durch dreidimensionales Flechten zwischen einer Vielzahl von Schichten aus Kettfäden (20) und einer Vielzahl von Schichten aus Schussfäden (30),
- Aufwickeln der faserigen Textur (140) auf mehreren übereinanderliegenden Windungen (141, 142, 143, 144) auf einer Wickelhülse (200) mit einem Profil, das demjenigen des herzustellenden Gehäuses entspricht, um eine faserige Vorform (300) mit einer Form zu erhalten, die derjenigen des herzustellenden Gehäuses entspricht,
- Verdichten der faserigen Vorform (300) durch eine Matrix,
und wobei beim Aufwickeln der letzten Windung der faserigen Textur (140) auf der Wickelhülse (200) mindestens ein Versteifungselement (150) zwischen der vorletzten Windung (143) und der letzten Windung (144) der faserigen Textur zwischengelegt wird, wobei das Versteifungselement auf der äußeren Oberfläche (143a) der vorletzten Windung (143) der faserigen Textur (140) hervorsteht und sich über den gesamten Umfang der vorletzten Windung erstreckt, wobei das Versteifungselement (150) im axialen Querschnitt eine Form vom Typ Omega aufweist,
**dadurch gekennzeichnet, dass** mindestens Kettfäden von der Vielzahl von Kettfädenschichten in der letzten Windung (144) der faserigen Textur (140), die im Bereich einer Zone vorhanden sind, die das mindestens eine Versteifungselement (150) bedeckt, eine Größe oder einen Titer aufweisen, die bzw. der kleiner als die Größe oder der Titer der Kettfäden der Vielzahl von Kettfädenschichten ist, die in den anderen Windungen (141, 142, 143) der faserigen Textur vorhanden sind.

2. Verfahren nach Anspruch 1, wobei jedes Versteifungselement (150) zwei seitliche Wände (151, 152) umfasst, die auf der äußeren Oberfläche (143a) der vorletzten Windung (143) der faserigen Textur (140) hervorstehen, wobei jede seitliche Wand einen Winkel zur Achse (X₁₀₀) des Gehäuses bildet, der zwischen 50° und 85° beträgt.

3. Verfahren nach Anspruch 2, wobei das Versteifungselement (150) ausgehend von einer Wabenstruktur ausgeführt wird.

4. Gasturbinenverdichtergehäuse (100) aus Verbundstoff mit einer faserigen Verstärkung, die eine Vielzahl von übereinanderliegenden Windungen (141, 142, 143, 144) einer faserigen Textur (140) mit der Form eines Bandes umfasst, das ein dreidimensionales Geflecht zwischen einer Vielzahl von Schichten von Kettfäden (20) und einer Vielzahl von Schichten von Schussfäden (30) aufweist, wobei die faserige Verstärkung durch eine Matrix verdichtet ist, wobei mindestens ein Versteifungselement (150) zwischen der vorletzten Windung (143) und der letzten Windung (144) der faserigen Textur (140) zwischengelegt ist, wobei das Versteifungselement auf der äußeren Oberfläche (143a) der vorletzten Windung (143) der faserigen Textur hervorsteht und sich über den gesamten Umfang der vorletzten Windung erstreckt, wobei das Versteifungselement (150) im axialen Querschnitt eine Form vom Typ Omega aufweist,
**dadurch gekennzeichnet, dass** mindestens Kettfäden von der Vielzahl von Kettfädenschichten in der letzten Windung (144) der faserigen Textur (140), die im Bereich einer Zone vorhanden sind, die das mindestens eine Versteifungselement (150) bedeckt, eine Größe oder einen Titer aufweisen, die bzw. der kleiner als die Größe oder der Titer der Kettfäden der Vielzahl von Kettfadenschichten ist, die in den anderen Windungen (141, 142, 143) der faserigen Textur vorhanden sind.

5. Gehäuse nach Anspruch 4, wobei jedes Versteifungselement (150) zwei seitliche Wände (151, 152) umfasst, die auf der äußeren Oberfläche (143a) der vorletzten Windung (143) der faserigen Textur (140) hervorstehen, wobei jede seitliche Wand mit der Achse (X₁₀₀) des Gehäuses einen Winkel von zwischen 50° und 85° bildet.

6. Gehäuse nach Anspruch 4 oder 5, wobei das Versteifungselement (150) ausgehend von einer Wabenstruktur ausgeführt ist.

7. Gasturbinen-Luftfahrtmotor, der ein Verdichtergehäuse (100) nach einem der Ansprüche 4 bis 6 aufweist.

## Claims

1. A method for manufacturing a composite-material casing (100) for a gas turbine, comprising:
- the production by three-dimensional weaving between a plurality of layers of warp threads (20) and a plurality of layers of weft threads (30) of a fiber texture (140) in the form of a strip,
- the winding of the fiber texture (140) around several superimposed turns (141, 142, 143, 144) on a mandrel (200) with a profile corresponding to that of the casing to be manufactured in order to obtain a fiber preform (300) of a shape corresponding to that of the casing to be manufactured,
- the densification of the fiber preform (300) by a matrix,
and wherein, during the winding of the last turn of the fiber texture (140) on the mandrel (200), at least one stiffening element (150) is interposed between the before-last turn (143) and the last turn (144) of the fiber texture, the stiffening element projecting over the outer surface (143a) of the before-last turn (143) of the fiber texture (140) and extending over the entire circumference of said before-last turn, the stiffening element (150) having an axial section of omega-type shape,
**characterized in that** at least some warp threads of the plurality of layers of warp threads in the last turn (144) of the fiber texture (140) present at the level of an area covering said at least one stiffening element (150) have a size or a tex less than the size or tex of the warp threads of the plurality of layers of warp threads present in the other turns (141, 142, 143) of the fiber texture.

2. The method as claimed in claim 1, wherein each stiffening element (150) comprises two lateral walls (151, 152) projecting over the outer surface (143a) of the before-last turn (143) of the fiber texture (140), each lateral wall forming an angle between 50° and 85° with the axis (X₁₀₀) of the casing.

3. The method as claimed in claim 2, wherein the stiffening element (150) is produced from a cellular structure.

4. A gas turbine fan casing (100) made of composite material with a fiber reinforcement comprising a plurality of superimposed turns (141, 142, 143, 144) of a fiber texture (140) in the form of a strip having three-dimensional weaving between a plurality of layers of warp threads (20) and a plurality of layers of weft threads (30), said fiber reinforcement being densified by a matrix, at least one stiffening element (150) being interposed between the before-last turn (143) and the last turn (144) of the fiber texture (140), the stiffening element projecting over the outer surface (143a) of the before-last turn (143) of the fiber texture and extending over the entire circumference of said before-last turn, the stiffening element (150) having an axial section of omega-type shape,
**characterized in that** at least some warp threads of the plurality of layers of warp threads in the last turn (144) of the fiber texture (140) present at the level of an area covering said at least one stiffening element (150) have a size or a tex less than the size or tex of the warp threads of the plurality of layers of warp threads present in the other turns (141, 142, 143) of the fiber texture.

5. The casing as claimed in claim 4, wherein each stiffening element (150) comprises two lateral walls (151, 152) projecting over the outer surface (143a) of the before-last turn (143) of the fiber texture (140), each lateral wall forming an angle between 50° and 85° with the axis (X₁₀₀) of the casing.

6. The casing as claimed in claim 4 or 5, wherein the stiffening element (150) is produced from a cellular structure.

7. An aeronautical gas turbine engine having a fan casing (100) as claimed in any of claims 4 to 6.
